# EUROPEAN PATENT SPECIFICATION

(11) **EP 1 740 918 B1**
(45) Date of publication and mention of the grant of the patent: **07.01.2009**
(21) Application number: 05732535.9
(22) Date of filing: 13.04.2005
(51) Int. Cl.: G01M 1/32, G01M 1/04, B65G 47/252

(54) **TIRE WEIGHT APPLYING APPARATUS AND METHOD**
REIFEN-GEWICHTSANLEGEVORRICHTUNG UND VERFAHREN
APPAREIL ET PROCEDE D'APPLICATION DE MASSES SUR UN PNEU

(30) Priority: 14.04.2004 US 561974 P; 11.04.2005 US 103097
(43) Date of publication of application: 10.01.2007
(73) Proprietor: Micro-Poise Measurement Systems, LLC, Akron OH 44305-4205 (US)
(72) Inventor: HAYDU, Steve, Uniontown, OH 44685 (US)
(74) Representative: Finnie, Peter John
(86) International application number: PCT/US2005/012353
(87) International publication number: WO 2005/106420

(56) References cited:
- EP-A- 0 797 086
- US-A- 4 106 964
- US-A- 4 890 717

## Description

### Technical Field

The present invention relates generally to the balancing of tire/wheel assemblies and, in particular, to a method and apparatus for facilitating the installation of wheel weights on a tire/wheel assembly to correct an imbalance condition.

### Background Art

Tire/wheel assemblies are typically balanced by vehicle manufacturers prior to the installation of the tire assemblies on the vehicle. Equipment for testing the balance of tire/wheel assemblies is currently available. These testing machines generally comprise a spindle that rotates the tire/wheel assembly. The spindle is coupled to force sensors, such as load cells, which provide signals that are used to determine the location and amount of wheel weights required to correct an imbalance condition in the tire assembly. Typically, the locations where wheel weights are to be installed are marked on the tire and/or wheel.

In most instances, the marked tire/wheel is conveyed to a weight installing station where an operator installs an appropriate wheel weight at each location marked by the wheel balancing machine. The type of wheel weight installed often depends on the type of wheel and wheel configuration. For many wheels, including both steel and alloy wheels, "pound-on" wheel weights are used. These weights are typically installed on the edge of the wheel rim by an operator who uses a hammer or similar tool. In many applications, a wheel weight is installed on both the outside (termed curb side) and inside of the wheel rim.

For some applications, adhesive backed weights are utilized, either alone or in combination with "pound-on" weights. Examples of adhesively attached wheel weights are shown in U.S. Patent No. 6,547,338.

For some wheel application, weights mounted to the outside (or the curb side) of the wheel are undesirable because they detract from the appearance of the wheel. For these applications, weights may be installed on the inside rim of the wheel, as well as an inside surface of the wheel, the latter location often being termed "mid-plane." Typically, a weight installed at the "mid-plane" of a wheel, is an adhesively attached weight.

The installation of weights on a tire/wheel assembly by an operator can be a strenuous or fatiguing operation for the operator. Efforts have been made to simplify the installation of these weights. For example, in currently available tire balancing equipment, a conveyor may be used to bring the tire/wheel assembly to an operator station. The operator station may include a plurality of bins, each bin containing a particular size and/or type of wheel weight. An indicator or display informs the operator what weight needs to be installed on the tire/wheel. The operator must then retrieve a weight from the appropriate bin and install it at the position marked on the tire assembly. The operator must then turn over the tire in order to install the required weight on the inside of the wheel. Some equipment does include turn over devices that aid the operator in turning over the wheel.

Through error or inadvertence, it is possible for an operator to select and install the incorrect weight resulting in an imbalanced tire. Attempts to reduce the chance of weight error have also been suggested in the prior art. For example, U.S. Patent No. 6,616,089 discloses a system and method for dispensing the appropriate amount of wheel weight to correct an imbalance condition in a particular tire/wheel assembly. The wheel weight dispenser is electronically coupled to the balance testing machine so that it dispenses the correct amount of wheel weight when the wheel is presented to the operator. The disclosed system eliminates the need for multiple weight bins from which an operator must select the correct weight and, consequently, simplifies and increases the reliability of the installation of corrective weights on a tire/wheel assembly.

It has been found that with presently available equipment, operator fatigue is still a problem. There have been other attempts to reduce the effort that must be expended by the operator to install the corrective weights. For example, in some types of tire balancing equipment, the tire/wheel is positioned on the transfer conveyor so that when it arrives at the operator station, the location where the first weight is to be installed is within a "short reach" of the operator. However, even with this improved equipment, the operator must often bend forward a considerable distance to install the other corrective weights and this effort is further increased if the wheel weight has to be installed at a "mid-plane" location on the tire assembly.

US-A-4890717, EP-A-0797086, and US-A-410964 each disclose tire handling apparatus for installing balance correction weights.

### Disclosure of Invention

The present invention provides a new and improved method and apparatus for facilitating the installation of corrective wheel weights on a wheel or a tire/wheel assembly, by a weight installer. The invention is as defined in the appended claims.

In the preferred and illustrated embodiment, the apparatus includes a tire/wheel handling mechanism that is mounted for reciprocal movement along a path from a tire receiving position to a tire presenting position and is operative to move a wheel or a tire/wheel assembly along the path from said receiving position to said presenting position where one or more balance correcting weights are installed at predetermined locations on a wheel. The apparatus also includes an operator station for supporting an operator at an operator position in a confronting relationship with the tire as it is conveyed by the handling mechanism from the tire receiving position to the tire presenting position. Unlike prior art machines, the operator generally faces the tire as it is moving along the path as compared to existing machines where the operator stands next to the path of travel for the tire. It should be noted here that the term "tire" used above and in the following description in most instances refers to a tire mounted to a wheel. To facilitate the description, the invention is being disclosed as it would be used for installing weights on a tire/wheel assembly. The invention, however, can be used to correct imbalance conditions on a wheel alone. Accordingly, the use of the term "tire" does not limit the invention to applications where a tire is involved.

With the present invention, the operator station is arranged so that as the operator is facing the tire that is located at the tire presenting position, the operator is generally located in a plane that is substantially perpendicular to the path of movement of the tire as it moves from tire receiving position to the tire presenting position.

According to a feature of the invention, the tire handling mechanism includes a pair of grippers for engaging a periphery of the tire at two spaced locations. Preferably, the grippers are moved towards and away from each other in order to apply a gripping force to the tire. The grippers are also preferably rotatable about a lateral axis, the lateral axis being substantially orthogonal to a rotational axis of the tire. More specifically, the lateral axis is substantially parallel to the operator plane defined above.

In the exemplary embodiment, the grippers are concurrently, reciprocatingly movable in a substantially vertical direction whereby the elevation of the tire with respect to the operator can change. In a more preferred embodiment, at least one of the grippers includes a rotating device for rotating the tire within the grippers about its rotational axis.

Preferably, the tire handling mechanism is reciprocatingly movable on a pair of tracks which define the path that extends from the tire receiving position to the tire presenting position.. In accordance with the preferred embodiment of this feature, the tire handling mechanism includes a pair of columns, each column reciprocatingly supporting an associated gripper. In a more preferred embodiment, the columns include ball screw drive systems whereby rotation of a ball screw causes the vertical movement in the associated gripper.

In accordance with this feature, the grippers preferably include an encoder for monitoring the rotated position of the tire within the grippers so that the tire can be positioned in a predetermined rotative position by the rotating device. This enables a location on the wheel where a corrective weight is to be installed to be located at a preferred position by the operator.

According to an aspect of this feature, grippers may be rotated about the lateral axis as a function of the type of corrective weight that is to be installed by the operator.

In accordance with the preferred embodiment, the apparatus includes a data storage device for storing operator preferences, so that as the tire is moved to the tire presenting position the grippers are rotated about the lateral axis in order to present the tire in an orientation preferred by the operator. In accordance with this embodiment, the rotating device for rotating the tire within the grippers about the tire's rotational axis, is used to rotate the tire so that when the tire is in the tire presenting position, a location on the wheel where a corrective weight is to be applied by the operator is presented in close proximity to the operator. This facilitates the installation of a corrective weight.

In the illustrated embodiment, the apparatus also includes an exit conveyor which at least partially conveys a tire from the tire presenting position to an exit position. Preferably, the exit conveyor is located below the operator station.

According to another feature of the invention, a light source may form part of the apparatus. The light source is used to illuminate a predetermined location on the tire/wheel assembly where a corrective weight is to be installed. In accordance with this feature, the light source may be a fixed light source and the tire/wheel assembly is rotated so that a location where a tire weight is to be installed is aligned with the light source. In accordance with this aspect of the invention, the rotating device forming part of the grippers is used to rotate the tire about its rotational axis until the location where a corrective weight is to be installed is aligned with the light source.

According to another feature of the invention, the grippers may include a sensor for determining the radius of a tire held between the grippers. In one embodiment, the sensor may monitor a distance the grippers move in order to engage the periphery of the tire.

According to the disclosed method of operation, at least one location on the wheel where a corrective weight should be installed is determined. An operator station is positioned for supporting a wheel weight applying operator. A tire handling mechanism is provided, mounted for reciprocal movement along a path from a tire receiving position to a tire presenting position. A wheel is moved, by the tire handling mechanism, along the path from the receiving position to the presenting position generally orthogonal to the operator station. The wheel is then rotated about a lateral axis (an axis that is orthogonal to the rotational axis of the wheel in order to present one side of the wheel in a confronting orientation with respect to the operator whereby the installation of a corrective wheel weight is facilitated.

In a more preferred method of operation, the wheel is rotated about its rotational axis in order to position the location on the wheel where the weight is to be installed in close proximity to the operator. If a corrective wheel weight needs to be installed on the other side of the wheel, grippers holding the wheel are rotated about a lateral axis so that the other side of the wheel is placed in a confronting relationship with the operator. Preferably, the wheel is also rotated about its rotational axis so a location where a wheel weight needs to be applied is positioned in close proximity to the operator.

The present invention is disclosed as it would be used with a human operator. It should be understood, however, that the principles of the invention can be applied to an apparatus or method which utilizes a machine-based operator or robotic device for installing the corrective wheel weights or for using a machine-based operator to machine the wheel at predetermined locations in order to correct an imbalance condition.

Additional features of the invention will become apparent and a fuller understanding obtained by reading the following detailed description made in connection with the accompanying drawings.

### Brief Description of Drawings

Figure 1 is a perspective view of tire balancing equipment that includes an apparatus, constructed in accordance with the preferred embodiment of the invention, that facilitates the manual installation of wheel weights on a tire/wheel assembly;
Figure 2 is a top plan view of the equipment shown in Figure 1;
Figure 3 is a perspective view of the apparatus that facilitates the manual installation of corrective wheel weights on a tire/wheel assembly;
Figure 4 is a top plan view of the apparatus shown in Figure 3;
Figure 5 is a side, partially sectional view, of the apparatus shown in Figure 3; and,
Figure 6 is a side elevational view of the apparatus, with portions removed for clarity, illustrating a position of the tire/wheel assembly as an operator is installing a weight in the "mid-plane" location.

### Best Mode for Carrying Out the Invention

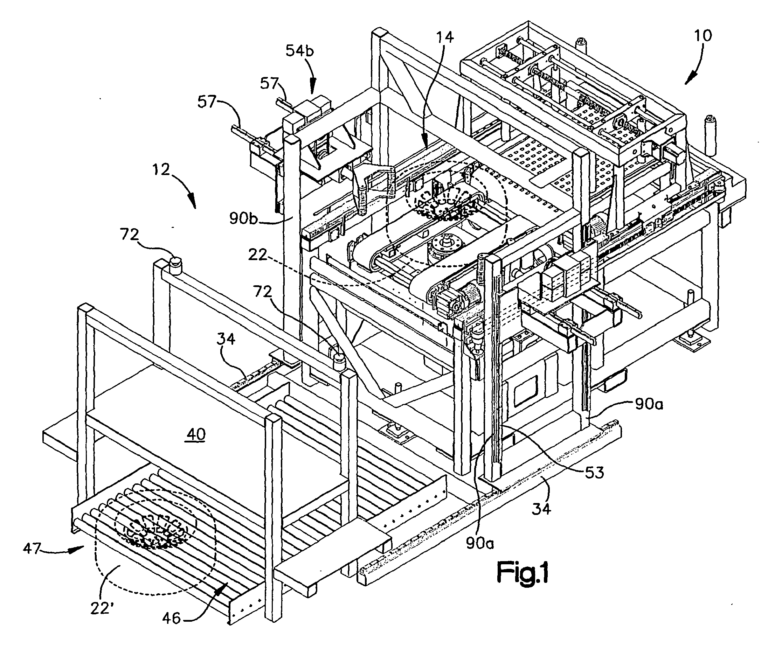

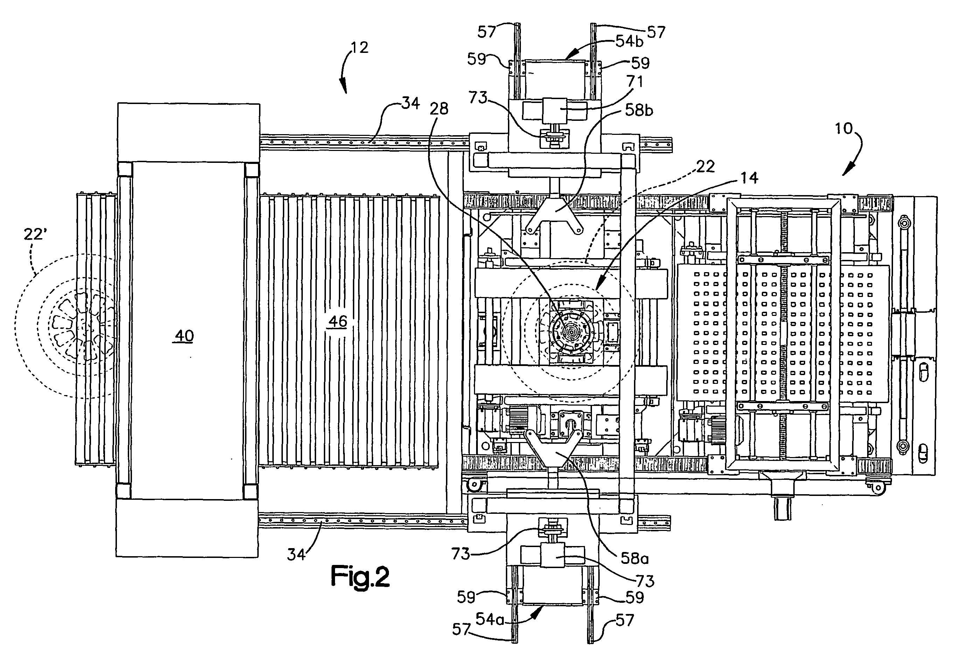

Figures 1 and 2 illustrate the overall construction of an apparatus for balancing tire/wheel assemblies. The apparatus includes a dynamic balance testing machine 10 where a tire/wheel assembly is tested to determine whether it is out of balance. If the tire/wheel assembly is found to be out of balance, the macnine 10 determines where on the tire assembly corrective weights need to be applied and the amount of weight that needs to be applied. The apparatus also includes a weight applying station or fixture 12 where the appropriate amount of corrective weights are installed at specific locations on the tire/wheel assembly as determined by the balance testing machine 10.

The balance testing machine 10 may take various forms, but in the illustrated embodiment is a dynamic balance testing machine.

The balance testing machine 10 includes a test station indicated generally by the reference character 14 where a tire/wheel assembly 22 is rotated on a spindle assembly 28. During the rotation of the tire assembly, forces generated by the imbalance condition of the tire assembly 22 are transmitted to force sensors, i.e., load cells. The load cells convert these forces to electrical signals that are used to generate data regarding the imbalance of the tire assembly. This data is used to determine the amount of, and the locations for installing wheel weights in order to correct the imbalance condition. Once the imbalance data is acquired, the tire/wheel assembly is rotated to predetermined positions with regard to upper and lower markers which are then activated to mark the locations where weights need to be installed on the upper and lower sides of the tire assembly 22.

In accordance with the present invention, the data acquired by the balancing machine 10 regarding the locations for the corrective weights are stored and/or ultimately transmitted to the weight applying station 12 which, as will be explained, presents the tire/wheel assembly 22 to a operator in predetermined or preprogrammed orientations to facilitate the installation of the corrective weights.

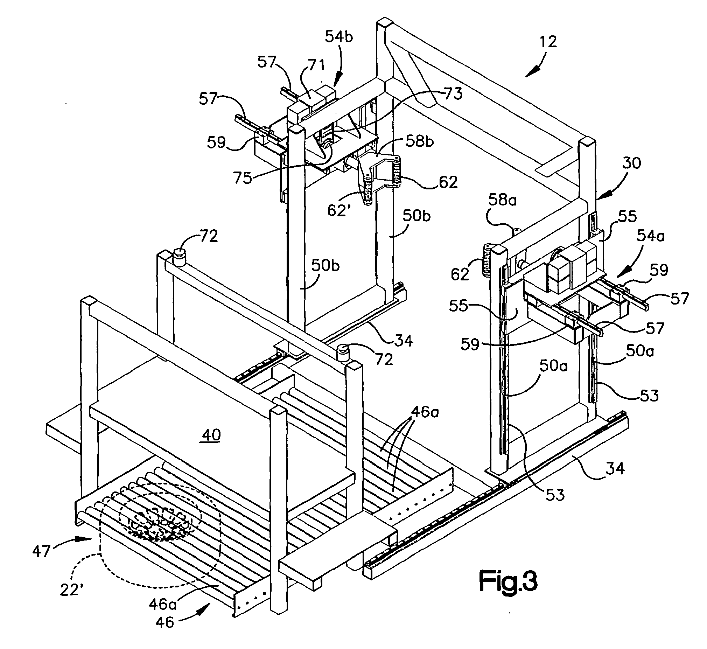

Figure 3 illustrates the overall construction of the weight applying station 12 where the corrective weights are installed by an operator. The weight applying station 12 includes a transfer/tire presenting shuttle 30 which is reciprocatingly movable along a track defined by a pair of rails 34. The shuttle 30 is movable between a tire pick-up position where it engages a tire/wheel assembly 22 at the conclusion of a test cycle and a tire presenting position where it orients the tire with respect to the operator to facilitate the installation of corrective weights by the operator.

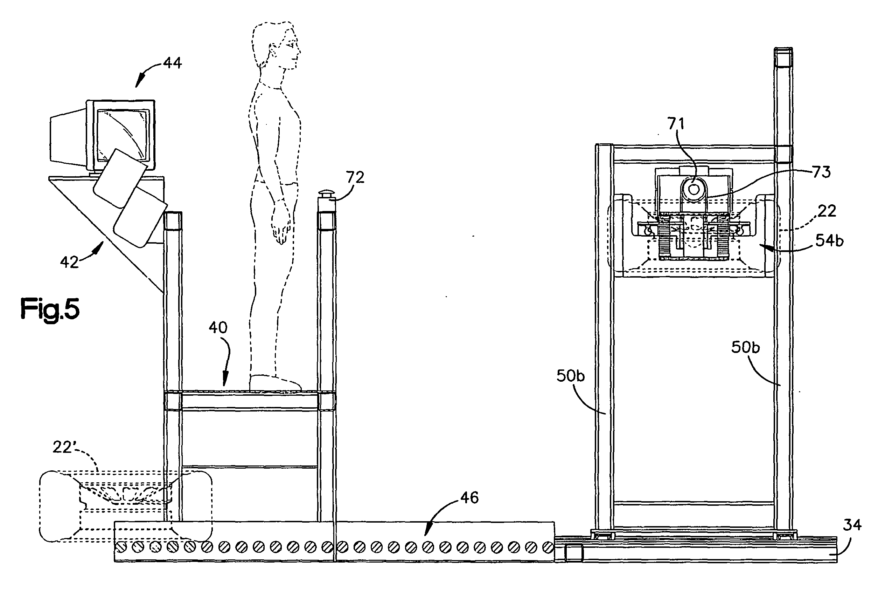

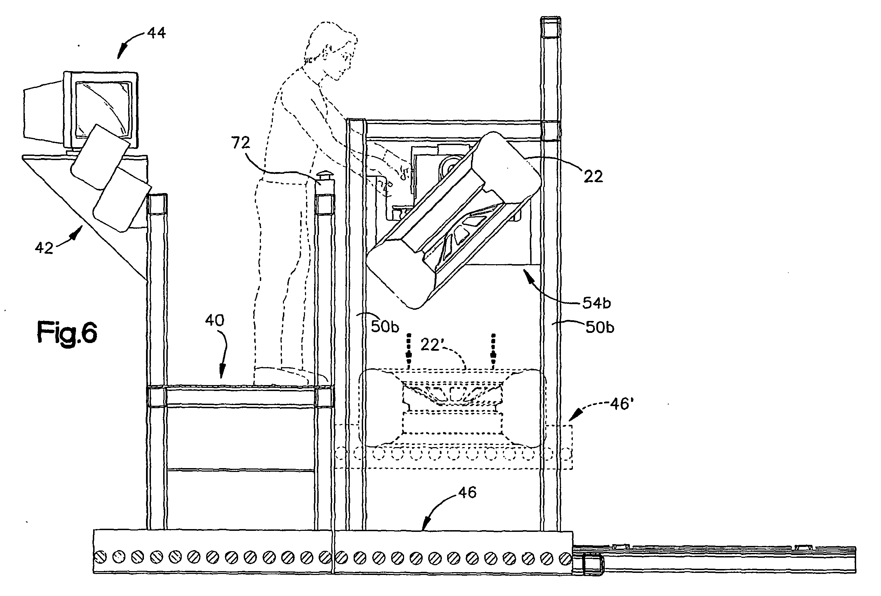

The weight applying station 12 also includes an elevated operator platform 40 on which an operator stands and from which the operator installs the weights on the tire/wheel assembly, while the tire/wheel assembly is held in predetermined orientations by gripping components forming part of the shuttle 30, as will be explained. As seen best in Figures 5 and 6, the weight applying station 12 may include conventional weight bins 42 from which the operator retrieves weights to be applied to the tire/wheel assembly 22. The weight bins may include indicators (not shown) which are illuminated to inform the operator which weight should be retrieved. Alternately, the weight apply station may include a display 44 which tells the operator what weight should be retrieved and installed on the tire/wheel assembly.

A discharge conveyor 46, as will also be explained, receives the tire/wheel assembly released by the shuttle 30 (after the weight applying operation is completed) and delivers it to an exit location 47. A tire assembly 22' exiting the apparatus is shown in Figure 3. The discharge conveyor 46, which may move up and down, may take many forms including, but not limited to, a series of parallel rollers 46a arranged on a motor driven belt.

In the illustrated embodiment, the shuttle 30 preferably includes a frame-like structure including pairs of vertical columns 50a, 50b, each pair of columns movably supporting associated clamp assemblies 54a, 54b. Each clamp assembly is reciprocatingly movable in a vertical direction along its associated pair of columns. Each clamp assembly 54a, 54b includes an associated tire gripper 58a, 58b, which are relatively moveable with respect to each other. At least one of the grippers 58a, 58b is movable towards and away from a centerline 59 of the station 12. In the illustrated and preferred embodiment, each gripper 58a, 58b is mounted to an associated, laterally extendable and rotatable arm 60a, 60b so both grippers 58a, 58b can currently move towards and away from the centerline 59.

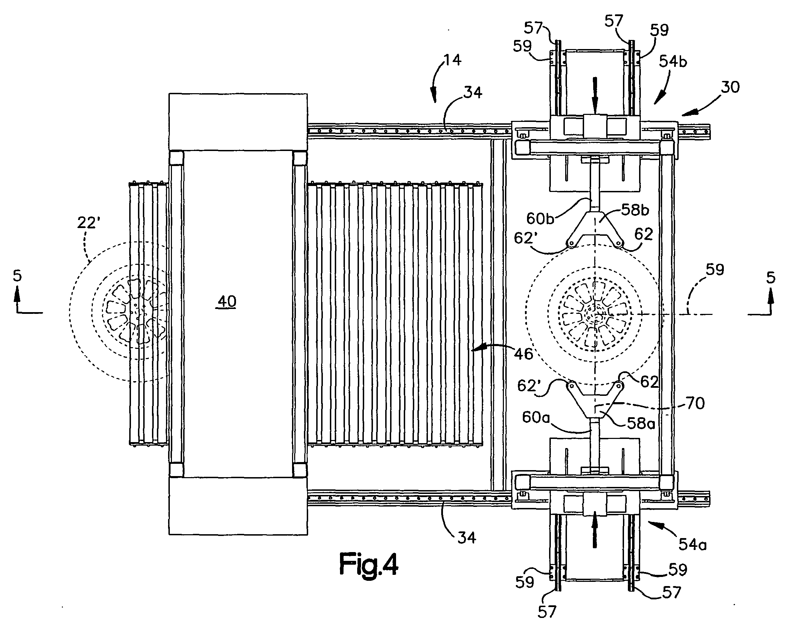

Referring in particular to Figures 3 and 4, various methods can be used to move the clamp assemblies 54a, 54b along their respective columns 50a, 50b. For example, and as schematically illustrated in Figure 3, motor driven ball screws 53 may be mounted inside each column 50a, 50b. The ball screws engage threaded members 55, forming part of each clamp assembly so that coordinated rotation of the ball screws produces vertical displacement in the associated clamp assembly.

As seen best in Figures 3 and 4, movement in the respective arms 60a, 60b is coordinated so that the grippers 58a, 58b concurrently move towards each other in order to engage a tire assembly 22 at the testing station 14 at the conclusion of the balance test cycle. Referring in particular to Figures 3 and 4, each clamp assembly 54a, 54b includes a pair of spaced apart slides 57 which are engaged by bearing blocks 59 forming part of the grippers. Associated actuators (not shown) are operative to reciprocatingly move the grippers 58a, 58b along the slides 57.

Each gripper 58a, 58b includes a pair of vertically oriented rollers 62 which engage the periphery of the tire assembly 22.

At least one of the rollers 62' is motor driven by a suitable drive source (not shown) so that when the tire/wheel assembly 22 is held between the grippers 58a, 58b, the tire assembly 22 can be rotated about its rotational axis within the grippers by energizing the drive motor for the roller 62'. In addition, the rotated position of the tire/wheel assembly is monitored so that the tire assembly 22 can be rotated to predetermined positions based on the data acquired by the dynamic balance machine 10. For example, one of the rollers 62 which may or may not be the driven roller 62' may include an encoder (not shown) which is used to provide the necessary feedback signal in order to rotate the tire assembly 22 to predetermined positions prior to or during a subsequent weight applying step.

In order to accurately rotate the tire to predetermined positions, the invention contemplates the use of previously stored or measured radius data for a tire/wheel assembly 22 being held by the grippers 58a, 58b. The radius data coupled with information provided by the roller driven encoder (not shown) enables control of the driven roller 62' in order to precisely rotate the tire/wheel assembly 22. Consequently, the tire/wheel assembly can be partially rotated through precise angles in order to accurately position the wheel for the weight applying step.

The radius or diameter data for the wheel being held by the grippers 58a, 58b can be obtained in several ways. The data may be entered by the operator; it may be measured at the balancing station and communicated to the weight apply station; or, the diameter (and hence radius) of the tire can be determined directly at the weight apply station by monitoring the distance to which the gripper arms 60a, 60b extend, utilizing appropriate sensors.

According to a feature of the invention, the grippers 58a, 58b are jointly rotatable about a lateral axis indicated by the reference character 70, in order to turn over the tire wheel assembly and to also provide a means for orienting (in the radial plane) the overall tire/wheel assembly at various angles. This is especially useful when applying adhesive weights at Amid-plane≅ locations on the tire/wheel assembly 22. In the illustrated embodiment, rotation of the arms 60a, 60b is achieved using a drive motor 71, and a drive belt 73 which drives an arm pulley 75 (shown in Figure 3). Encoders or other motion sensors are used to monitor the position of the grippers 58a, 58b so that movement in the grippers is coordinated. Thus, the grippers remained aligned, even when rotating.

According to the invention, movement in the clamping assemblies 54a, 54b along the associated columns 90a, 90b, respectively is coordinated so that both clamping assemblies move together in an aligned, confronting relationship. Movement in the clamping assemblies 54a, 54b is coordinated using known technology, such as position sensors and feedback components which operate in cooperation with control software. Rotation of the grippers 58a, 58b about the axis 70 is also coordinated so that both grippers 58a, 58b move in unison and in an aligned relationship.

The weight applying machine/fixture 14 operates as follows. The shuttle 30 is initially driven to its tire receiving position shown in Figure 1. In this position, the grippers 58a, 58b are in a spaced apart position but substantially aligned with the tire/wheel assembly 22 located at the test station 14 (Figure 1). Preferably, the centerline 70 of the extendable arms 60a, 60b are aligned with the rotational axis of the tire assembly 22. At the conclusion of the test cycle, and as more fully explained in the above-identified U.S. application, an elevator forming part of the dynamic balancing machine raises the tire/wheel assembly off the spindle 28. At this point in machine operation, data regarding the imbalance of the tire has been acquired and the locations on the tire assembly 22 where corrective weights need to be installed have been determined. This data, along with data regarding the current orientation of the tire assembly 22, is then transferred to the weight applying station where a suitable controller utilizes the data to control the movement of the tire/wheel assembly in order to orient the tire assembly in operator preferred or selected positions to facilitate the application of corrective wheel weights. The activation of the shuttle and various functions of the clamping assemblies 54a, 54b is preselected or preprogrammed by the operator to suit his/her personal preferences or requirements.

Prior to engaging the tire/wheel assembly (which is now sitting atop the exit conveyor of the dynamic balancing machine 10), the clamping assemblies 54a, 54b are raised or lowered, if required, in order to vertically align the gripper assemblies 58a, 58b with the tire assembly 22. Once aligned, one or both gripper arms 60a, 60b are extended in order to move one or both grippers 58a, 58b towards the tire assembly 22. Upon engaging the periphery of the tire, a clamping force is generated by continuing to urge the grippers 58a, 58b towards the tire assembly 22. This clamping force maintains the engagement of the tire assembly by the clamping assemblies 54a, 54b. The shuttle 30 is energized to move the tire assembly off the discharge conveyor by moving towards the operator platform 40. It is driven there by a suitable motor or power source (not shown).

As the shuttle 30 moves towards the operator platform 40 or, alternately, after the shuttle 30 reaches the operator platform, the clamping assemblies 54a, 54b are raised or lowered in order to present the upper surface (or curb side) 22a of the tire/wheel assembly 22 at a height that facilitates the installation of weights by the operator (if the tire/wheel assembly requires me application or a correction weight on the curb side). The tire/wheel assembly 22 is then rotated (about its rotational axis) within the grippers 58a, 58b (by the powered roller 62') or alternately as the shuttle 30 is moving so that a location on the tire/wheel assembly 22 where the weight is to be installed is at a predetermined location. The location may also be marked by the balancing machine 10.

The present invention contemplates several methods for indicating the placement of the corrective weight by the operator. As an example, the tire assembly 22 can be rotated (about the rotational axis of the wheel assembly) so that a previously marked location for installing the weight is closest to the operator, i.e., at the six o=clock position as viewed from the operator=s vantage point. Alternately, the tire assembly can be rotated (about the rotational axis of the wheel) so the location where the wheel weight is to be installed is aligned with a fixed beam of light, i.e., laser, which then provides a visual marking for the operator.

According to a feature of the invention, the clamping assemblies 54a, 54b may be concurrently rotated about the lateral axis 70 in order to present the wheel at an angle with respect to the operator if an angular presentation of the wheel would facilitate installation of the weight.

In the preferred and illustrated embodiment, the lateral axis 70 about which the tire can be rotated, is substantially parallel to the operators shoulders or the plane of the operator's body. In other words, the axis 70 does not intersect the operator or a plane in which the operator stands. This provides a significant advantage because the location where a weight needs to be applied by the operator can be positioned at any height desired by the operator but, more importantly, the overall tire/wheel can be tilted (and, if need be, raised or lowered) so that an interior of the wheel can be presented in close proximity (or within a short reach) of the operator.

In the illustrated embodiment, this relationship is achieved by rotating the position of the operator platform (and, hence, the operator) 90E from the more conventional positions provided by the prior art. In the prior art, the operator often stands to the side of a conveyer that brings the tire to the weight applying station and if the weight applying station includes a tire turnover device, the axis of rotation for that device typically intersects the operator. As a result, the turnover devices of the prior art cannot readily tilt the tire/wheel assembly to present an interior of the wheel in close proximity to the operator. The present invention thus provides an apparatus for rotating the tire/wheel assembly that serves two functions. It is used to turnover the tire so that corrective weights could be installed on both sides of the tire/wheel assembly, but is also used to tilt the tire/wheel in predetermined orientations to facilitate the installation of the corrective weights.

After the corrective weight is applied to one side of the tire/wheel assembly, the operator, through a suitable signaling device such as a pair of palm switches 72 (shown in Figures 3 and 5) confirms that the first weight has been installed. The clamping assemblies 54a, 54b are then concurrently rotated about the lateral axis to overturn the tire assembly in order to present an underside of the tire/wheel assembly 22b to the operator. The tire assembly 22 is then also rotated about the rotational axis of the wheel (by the roller 62') so that the location where the weight is to be installed is at a predetermined location or aligned with a weight applying indicator, such as a beam of light.

The radial plane of the tire assembly 22 may also be oriented to facilitate installation of the weight. For example, if an adhesive type weight is to be installed on the interior of the wheel, i.e., "mid plane", the tire/wheel assembly 22 may be presented at an appropriate angle to facilitate the operator reaching into the wheel to install the weight.

According to a feature of the invention, the height and orientation at which the tire/wheel is presented to an operator can vary depending on operator preferences. So, for example, shorter operators can reduce the height at which the tire/wheel 22 is presented so that the reach of the operator is accommodated. By adjusting the presentation of the tire to suit the operator, less operator fatigue results.

The invention also contemplates the storing of operator preferences so that when an operator is to begin using the machine, he/she enters an identifier which, in turn, loads his or her preferences into the machine so that during his/her shift the tire/wheels are presented at heights and distances that have been previously selected by that operator. When operators are changed, the new operator simply enters his/her identifier and from that point on, the machine presents tire assemblies in accordance with the preferences for the new operator.

It should be noted here that the present invention has been described as it would be used to install a single corrective weight on each side of the wheel. This invention, however, also contemplates the automatic positioning of the tire/wheel assembly when: 1) a corrective weight is to be applied on only one side of the tire/wheel assembly; 2) multiple weights are to be installed on one side of the wheel; and/or, multiple weights are to be installed on both sides of the wheel that may be similar or different. In short, each side of the wheel may receive zero, one or multiple weights of similar or dissimilar types. For each weight to be applied, the disclosed apparatus will orient the tire/wheel assembly as described above, and pause until the operator indicates that the weight has been applied, i.e., by pressing the palm switches 72.

When the all of the corrective weights have been installed, the operator presses the palm switches 72 and the tire/wheel 22 is preferably rotated about the lateral axis 70 to a discharge orientation, i.e., with the outer or curb side 22a of the tire/wheel assembly facing upwards. In the preferred embodiment and as shown in Figure 6, a portion 46' of the discharge conveyor 46 is raised to receive the now balanced tire/wheel assembly 22. The clamping assemblies 54a, 54b are then concurrently retracted to release the tire assembly 22 onto the discharge conveyor 46' whereupon conveyor 46' is lowered and the tire assembly is conveyed to the exit location 47 on the machine. As the conveyor portion 46' is being lowered the shuttle 30 is returning to the tire receiving position where the next tire assembly is engaged and presented to the operator for the installation of corrective weights.

Elevating the conveyor portion 46' to receive the tire assembly decreases the cycle time for the apparatus because the shuttle 30 can immediately return to the test station 14 to pickup the next tire/wheel. Without the elevatable conveyor portion 46', the clamping assemblies would have to fully drop to release the tire and then move to a raised position before the shuttle 30 could move to the test station 14.

With the present invention the application of corrective weights to tire/wheel assemblies is greatly facilitated. Unlike prior art weight applying equipment, the orientation of the tire/wheel assembly 22 can vary depending on the personal preferences of the operator. In addition, the marking of the wheel weight locations utilizing ink-based or paint-based markers may be eliminated. In addition, the rotatability of the tire within the grippers 58a, 58b minimizes the extent to which the operator must reach in order to apply the weights, thus, substantially reducing operator fatigue.

Those skilled in the art will recognize that when the required machine throughput is higher than what can be achieved by a single operator, or at a single station, prior art machines have employed multiple weight applying stations or have conveyed the balanced wheel in its inverted position to an additional station which returns it to its normal orientation. The machine of the present invention can be easily adapted by those skilled in the art to operate in accordance with these principles employed by previous machines.

Although the invention has been described with regard to wheel weights applied by a human operator, the invention also contemplates the application of wheel weights by robotic systems. Since the disclosed apparatus can precisely position and orient the tire/wheel assembly, so that the location where the wheel weight is to be applied, is known precisely, automated equipment could be adapted to directly apply the wheel weights to the tire/wheel assembly 22. In addition, this invention contemplates the balancing of tire/wheel assemblies by machining, i.e., milling or drilling, portions of the wheel assembly in order to correct an imbalance condition. As indicated above, the disclosed apparatus is capable of precisely positioning a tire/wheel assembly so that a location where either weight has to be applied or weight has to be removed to correct an imbalance condition is precisely known and, therefore, this apparatus can be used to correct tire/wheel imbalance using machining operations, rather than just the installation of corrective wheel weights. it should also be noted here that in the illustrated embodiment, the clamp assemblies 54a, 54b are vertically movable along their associated columns 50a, 50b. In addition, both grippers 58a, 58b concurrently move towards and away from each other in order to engage a tire. The invention, however, contemplates constructions in which the clamp assemblies are not required to move vertically or are required to move in the vertical direction only slightly. This can be achieved by proper selection of exit conveyer heights and operator platform heights. In addition, it is possible to construct the clamping assemblies so that only one gripper needs to extend in order to engage a tire.

The present invention has been disclosed in connection with the application of corrective wheel weights on a tire/wheel assembly. It should be understood that the principles of the invention can be used as part of an apparatus for correcting imbalance conditions in a wheel to which a tire has not yet been mounted. In addition, the principles of the invention can be applied to an apparatus in which imbalance conditions on a tire/wheel assembly or a wheel alone are corrected by machining (i.e., milling, grinding) predetermined locations on the wheel in order to correct the imbalance condition.

Although the invention has been described with a certain degree of particularity, it should be understood that those skilled in the art can make various changes to it without departing from the scope of the invention as hereinafter claimed.

## Claims

1. An apparatus for facilitating the installation of balance correction weights on a tire that is mounted to a wheel, comprising:
a) a tire handling mechanism (30) mounted for reciprocating movement along a path from a tire receiving position to a tire presenting position and operative to move said tire along said path from said tire receiving position to said tire presenting position where a balance correcting weight is installed at a predetermined location on said tire/wheel assembly; and, wherein said tire handling mechanism is reciprocatingly supported on a pair of tracks (34) which define said path that extends from said tire receiving position to said tire presenting position; and,
b) an operator station (40) for supporting an operator at an operator position in a confronting relationship with said tire as it is conveyed by said tire handling mechanism from said tire receiving position to said tire presenting position.

2. The apparatus of claim 1, wherein said tire handling mechanism (30) includes a pair of grippers (58a,b) for engaging a periphery of said tire at two spaced locations.

3. The apparatus of claim 2, wherein said grippers (58a,b) are movable towards and away from each other in order to apply a gripping force to said tire.

4. The apparatus of claims 2 or 3, wherein said grippers (58a,b) are rotatable about a lateral axis, said lateral axis being substantially orthogonal to a rotational axis of said tire.

5. The apparatus of claim 4, wherein said lateral axis is substantially perpendicular to the path from said tire receiving position to said tire presenting position.

6. The apparatus of any of claims 2 to 5, wherein said grippers (58a,b) are concurrently, reciprocatingly movable in a substantially vertical direction whereby the elevation of said tire with respect to said operator station (40) is changed.

7. The apparatus of any of claims 2 to 6, wherein at least one of said grippers (58a,b) includes a tire rotating device (62) for rotating said tire within said grippers about its rotational axis.

8. The apparatus of claim 7, wherein said tire rotating device (62) is adapted to rotate said tire held by said grippers (58a,b) such that a location on said tire where a corrective weight is to be installed is aligned with a light source.

9. The apparatus of claim 7 or 8, wherein said tire rotating device (62) is adapted to rotate said tire such that a location on said tire where a corrective weight is to be applied is presented in close proximity to the operator station (40) in order to facilitate installation of said corrective weight.

10. The apparatus of any of claims 7 to 9, wherein at least one of said grippers (58a,b) includes an encoder for monitoring the rotative position of said tire within said grippers.

11. The apparatus of any of claims 4 to 10, wherein the position to which said tire is rotated by said grippers (58a,b) is a function of the type of corrective weight that is to be installed.

12. The apparatus of any of claims 4 to 11, wherein the position to which said tire is rotated by said grippers (58a,b) is dependent on operator preferences.

13. The apparatus of any of claims 3 to 12, wherein said grippers include a sensor for determining a radius of said tire.

14. The apparatus of claim 13, wherein said sensor monitors a distance said grippers (58a,b) move in order to engage said periphery of said tire.

15. The apparatus of any of claims 4 to 14, including a data storage device for storing operator preferences, such that when a tire is moved to the tire presenting position, said grippers (58a,b) are rotated about said lateral axis in order to present said tire in orientation preferred by an operator.

16. The apparatus of any preceding claim, wherein said tire handling mechanism includes a pair of columns (50a,b), each column reciprocatingly supporting an associated gripper (58a,b), each gripper reciprocatingly movable in a vertical direction along its associated column.

17. The apparatus of claim 16, wherein said columns include a ball screw drive system (53) whereby rotation of a ball screw causes vertical movement in the associated gripper (58a,b).

18. The apparatus of any preceding claim, further including an exit conveyor (46) which at least partially conveys said tire from said tire presenting position to an exit position.

19. The apparatus of claim 18, wherein said exit conveyor (46) is located below said operator station (40).

20. The apparatus of any preceding claim, further including a light source for illuminating a predetermined location on said tire/wheel assembly at said tire presenting position.

21. A method for installing balance correcting weights on a wheel that mounts a tire, comprising the steps of:
a) determining at least one location on said wheel where a corrective weight should be installed;
b) providing an operator station (40) for supporting a wheel weight installing operator;
c) providing a tire handling mechanism (30) mounted for reciprocating movement along a path from a tire receiving position to a tire presenting position; wherein said tire handling mechanism is reciprocatingly supported on a pair of tracks (34) which define said path that extends from said tire receiving position to said tire presenting position; and,
d) moving, by said tire handling mechanism, said wheel along said path from said receiving position to said presenting position generally orthogonal to said operator station; and,
e) rotating said wheel about a lateral axis that is substantially perpendicular to the rotational axis of said wheel in order to present one side of said wheel at a confronting orientation with respect to said operator station whereby the installation of a corrective wheel weight on said wheel is facilitated.

22. The method of claim 21, wherein said wheel is rotated about its rotational axis in order to position a location on said wheel where a weight is to be installed, in close proximity to said operator station (40).

23. The method of claim 22, further comprising the step of rotating said wheel about said lateral axis until another side of said wheel is in a confronting relationship to said operator station (40), such that another corrective wheel weight can be installed at a predetermined location on said wheel.

## Patentansprüche

1. Vorrichtung zum Erleichtern des Einbaus von Auswuchtgewichten in einen Reifen, der an einem Rad montiert ist, Folgendes aufweisend:
a) einen Reifenhandhabungsmechanismus (30), der für eine hin- und hergehende Bewegung entlang eines Wegs von einer Reifenaufnahmeposition zu einer Reifenpräsentationsposition angebracht und betriebsfähig ist, den Reifen entlang des Wegs von der Reifenaufnahmeposition zur Reifenpräsentationsposition zu bewegen, an der ein Auswuchtgewicht an einer vorbestimmten Stelle am System Reifen/Rad eingebaut wird; und wobei der Reifenhandhabungsmechanismus hin- und hergehend bewegbar auf einem Paar von Schienen (34) gelagert ist, die den Weg bilden, der sich von der Reifenaufnahmeposition zur Reifenpräsentationsposition erstreckt; und
b) eine Bedienerstation (40), um einen Bediener an einer Bedienerposition in einer dem Reifen zugewandten Lagebeziehung aufzunehmen, wenn der Reifen mittels des Reifenhandhabungsmechanismus von der Reifenaufnahmeposition zur Reifenpräsentationsposition befördert wird.

2. Vorrichtung nach Anspruch 1, wobei der Reifenhandhabungsmechanismus (30) ein Paar Greifer (58a, b) umfasst, um an einem Umfang des Reifens an zwei voneinander beabstandeten Stellen anzugreifen.

3. Vorrichtung nach Anspruch 2, wobei die Greifer (58a, b) aufeinander zu und voneinander weg bewegbar sind, um eine Greifkraft an den Reifen anzulegen.

4. Vorrichtung nach Anspruch 2 oder 3, wobei die Greifer (58a, b) um eine laterale Achse drehbar sind, wobei die laterale Achse im Wesentlichen orthogonal zu einer Drehachse des Reifens ist.

5. Vorrichtung nach Anspruch 4, wobei die laterale Achse im Wesentlichen senkrecht zu dem Weg von der Reifenaufnahmeposition zur Reifenpräsentationsposition ist.

6. Vorrichtung nach einem der Ansprüche 2 bis 5, wobei die Greifer (58a, b) gleichzeitig in einer im Wesentlichen vertikalen Richtung hin- und hergehend bewegbar sind, wodurch die Höhenlage des Reifens in Bezug auf die Bedienerstation (40) verändert wird.

7. Vorrichtung nach einem der Ansprüche 2 bis 6, wobei mindestens einer der Greifer (58a, b) eine Reifendrehvorrichtung (62) umfasst, um den Reifen in den Greifern um seine Drehachse zu drehen.

8. Vorrichtung nach Anspruch 7, wobei die Reifendrehvorrichtung (62) dazu ausgelegt ist, den von den Greifern (58a, b) gehaltenen Reifen so zu drehen, dass eine Stelle am Reifen, an der ein Auswuchtgewicht eingebaut werden soll, mit einer Lichtquelle ausgerichtet ist.

9. Vorrichtung nach Anspruch 7 oder 8, wobei die Reifendrehvorrichtung (62) dazu ausgelegt ist, den Reifen so zu drehen, dass eine Stelle am Reifen, an der ein Auswuchtgewicht angebracht werden soll, in nächster Nähe zur Bedienerstation (40) präsentiert wird, um den Einbau des Auswuchtgewichts zu erleichtern.

10. Vorrichtung nach einem der Ansprüche 7 bis 9, wobei mindestens einer der Greifer (58a, b) eine Codiervorrichtung umfasst, um die Drehstellung des Reifens in den Greifern zu überwachen.

11. Vorrichtung nach einem der Ansprüche 4 bis 10, wobei die Position, in welche der Reifen mittels der Greifer (58a, b) gedreht wird, von der Art von Auswuchtgewicht abhängt, das eingebaut werden soll.

12. Vorrichtung nach einem der Ansprüche 4 bis 11, wobei die Position, in welche der Reifen mittels der Greifer (58a, b) gedreht wird, von den Bedienervorzugseinstellungen abhängt.

13. Vorrichtung nach einem der Ansprüche 3 bis 12, wobei die Greifer einen Sensor umfassen, um einen Radius des Reifens zu bestimmen.

14. Vorrichtung nach Anspruch 13, wobei der Sensor eine Strecke überwacht, welche die Greifer (58a, b) zurücklegen, um am Umfang des Reifens anzugreifen.

15. Vorrichtung nach einem der Ansprüche 4 bis 14, eine Datenspeichervorrichtung zum Speichern von Bedienervorzugseinstellungen umfassend, so dass, wenn ein Reifen zur Reifenpräsentationsposition bewegt wird, die Greifer (58a, b) um die laterale Achse gedreht werden, um den Reifen in einer von einem Bediener bevorzugten Ausrichtung zu präsentieren.

16. Vorrichtung nach einem der vorhergehenden Ansprüche, wobei der Reifenhandhabungsmechanismus ein Paar Ständer (50a, b) umfasst, wobei jeder Ständer hin- und hergehend bewegbar einen dazugehörigen Greifer (58a, b) lagert, wobei jeder Greifer in einer vertikalen Richtung entlang seines dazugehörigen Ständers hin- und hergehend bewegbar ist.

17. Vorrichtung nach Anspruch 16, wobei die Ständer ein Kugelumlaufspindel-Antriebssystem (53) umfassen, wobei eine Drehung einer Kugelumlaufspindel eine vertikale Bewegung im dazugehörigen Greifer (58a, b) bewirkt.

18. Vorrichtung nach einem der vorhergehenden Ansprüche, darüber hinaus eine Austrittsfördereinrichtung (46) umfassend, die den Reifen zumindest teilweise von der Reifenpräsentationsposition zu einer Austrittsposition befördert.

19. Vorrichtung nach Anspruch 18, wobei sich die Austrittsfördereinrichtung (46) unter der Bedienerstation (40) befindet.

20. Vorrichtung nach einem der vorhergehenden Ansprüche, darüber hinaus eine Lichtquelle zum Beleuchten einer vorbestimmten Stelle am System Reifen/Rad an der Reifenpräsentationsposition umfassend.

21. Verfahren zum Einbau von Auswuchtgewichten an einem Rad, an dem ein Reifen angebracht ist, folgende Schritte aufweisend:
a) Bestimmen mindestens einer Stelle am Rad, an der ein Auswuchtgewicht eingebaut werden sollte;
b) Bereitstellen einer Bedienerstation (40) zur Aufnahme eines ein Radgewicht einbauenden Bedieners;
c) Bereitstellen eines Reifenhandhabungsmechanismus (30), der für eine entlang eines Wegs von einer Reifenaufnahmeposition zu einer Reifenpräsentationsposition hin- und hergehende Bewegung angebracht ist; wobei der Reifenhandhabungsmechanismus hin- und hergehend bewegbar auf einem Paar von Schienen (34) gelagert ist, die den Weg bilden, der sich von der Reifenaufnahmeposition zur Reifenpräsentationsposition erstreckt; und
d) Bewegen des Rades mittels des Reifenhandhabungsmechanismus im Allgemeinen orthogonal zur Bedienerstation entlang des Wegs von der Aufnahmeposition zur Präsentationsposition; und
e) Drehen des Rads um eine laterale Achse, die im Wesentlichen senkrecht zur Drehachse des Rads ist, um eine Seite des Rads in einer im Hinblick auf die Bedienerstation zugewandten Ausrichtung zu präsentieren, wodurch der Einbau eines Radauswuchtgewichts am Rad erleichtert wird.

22. Verfahren nach Anspruch 21, wobei das Rad um seine Drehachse gedreht wird, um eine Stelle am Rad, an welcher ein Gewicht eingebaut werden soll, in nächster Nähe zur Bedienerstation (40) zu positionieren.

23. Verfahren nach Anspruch 22, darüber hinaus den Schritt des Drehens des Rads um die laterale Achse umfassend, bis eine andere Seite des Rads so in einem der Bedienerstation (40) zugewandten Verhältnis ist, dass ein anderes Radauswuchtgewicht an einer vorbestimmten Stelle am Rad eingebaut werden kann.

## Revendications

1. Appareil qui facilite l'installation de poids de correction de l'équilibrage d'un bandage monté sur une roue, comprenant :
a) un mécanisme (30) de manipulation du bandage monté de manière à exécuter un déplacement de va-et-vient sur un parcours qui s'étend entre une position de réception du bandage et une position de présentation du bandage et qui agit pour déplacer ledit bandage sur ledit parcours entre ladite position de réception du bandage et ladite position de présentation du bandage dans laquelle un poids de correction de l'équilibrage est installé en un emplacement prédéterminé sur ledit ensemble bandage/roue, ledit mécanisme de manipulation du bandage étant en cet emplacement soutenu en va-et-vient sur deux pistes (34) qui définissent ledit parcours qui va de ladite position de réception du bandage à ladite position de présentation du bandage et
b) un poste d'opérateur (40) qui supporte un opérateur en une position d'opérateur située face audit bandage lorsque ce dernier est transporté par ledit mécanisme de manipulation du bandage entre ladite position de réception du bandage et ladite position de présentation du bandage.

2. Appareil selon la revendication 1, dans lequel ledit mécanisme (30) de manipulation du bandage comprend deux pinces (58a, b) qui s'engagent sur la périphérie dudit bandage en deux emplacements espacés l'un de l'autre.

3. Appareil selon la revendication 2, dans lequel lesdites pinces (58a, b) peuvent se rapprocher et s'éloigner l'une de l'autre pour appliquer une force de saisie sur ledit bandage.

4. Appareil selon les revendications 2 ou 3, dans lequel lesdites pinces (58a, b) peuvent tourner autour d'un axe latéral, l'axe latéral étant essentiellement orthogonal à l'axe de rotation dudit bandage.

5. Appareil selon la revendication 4, dans lequel ledit axe latéral est essentiellement perpendiculaire au parcours allant de ladite position de réception du bandage à ladite position de présentation du bandage.

6. Appareil selon l'une quelconque des revendications 2 à 5, dans lequel lesdites pinces (58a, b) peuvent se déplacer simultanément en un déplacement de va-et-vient dans une direction essentiellement verticale, ce qui modifie la hauteur dudit bandage par rapport audit poste (40) d'opérateur.

7. Appareil selon l'une quelconque des revendications 2 à 6, dans lequel au moins une desdites pinces (58a, b) comprend un dispositif (62) de rotation du bandage qui fait tourner ledit bandage saisi dans lesdites pinces autour de son axe de rotation.

8. Appareil selon la revendication 7, dans lequel ledit dispositif (62) de rotation du bandage est conçu pour faire tourner ledit bandage saisi par lesdites pinces (58a, b) de manière à aligner sur une source de lumière l'emplacement dudit bandage où un poids correcteur doit être installé.

9. Appareil selon la revendication 7 ou 8, dans lequel ledit dispositif (62) de rotation du bandage est conçu pour faire tourner ledit bandage de telle sorte que l'emplacement dudit bandage où un poids correcteur doit être placé soit présenté à proximité étroite du poste d'opérateur (40) pour faciliter l'installation dudit poids correcteur.

10. Appareil selon l'une quelconque des revendications 7 à 9, dans lequel au moins une desdites pinces (58a, b) comprend un encodeur qui surveille la position en rotation dudit bandage dans lesdites pinces.

11. Appareil selon l'une quelconque des revendications 4 à 10, dans lequel la position dans laquelle on fait tourner ledit bandage à l'aide desdites pinces (58a, b) dépend du type de poids correcteur qui doit être installé.

12. Appareil selon l'une quelconque des revendications 4 à 11, dans lequel la position dans laquelle on fait tourner le bandage à l'aide desdites pinces (58a, b) dépend des préférences de l'opérateur.

13. Appareil selon l'une quelconque des revendications 3 à 12, dans lequel lesdites pinces comprennent un détecteur qui détermine le rayon dudit bandage.

14. Appareil selon la revendication 13, dans lequel ledit détecteur contrôle la distance de laquelle lesdites pinces (58a, b) se sont déplacées pour engager ladite périphérie dudit bandage.

15. Appareil selon l'une quelconque des revendications 4 à 14, comprenant un dispositif d'enregistrement des données qui enregistre les préférences de l'opérateur, pour que lorsque l'on sort un bandage de la position de présentation du bandage, lesdites pinces (58a, b) tournent autour dudit axe latéral pour présenter ledit bandage dans l'orientation préférée par l'opérateur.

16. Appareil selon l'une quelconque des revendications précédentes, dans lequel ledit mécanisme de manipulation du bandage comprend deux colonnes (50a, b), chaque colonne supportant un déplacement de va-et-vient d'une pince (58a, b) associée, chaque pince pouvant se déplacer en va-et-vient dans la direction verticale sur sa colonne associée.

17. Appareil selon la revendication 16, dans lequel lesdites colonnes comprennent un système (53) d'entraînement à vis à bille au moyen duquel la rotation d'une vis à bille induit un déplacement vertical des pinces (58a, b) associées.

18. Appareil selon l'une quelconque des revendications précédentes, comprenant de plus un transporteur (46) qui transporte ledit bandage sur au moins une partie de la distance entre ladite position de présentation du bandage et une position de sortie.

19. Appareil selon la revendication 18, dans lequel ledit convoyeur de sortie (46) est situé en dessous dudit poste d'opérateur (40).

20. Appareil selon l'une quelconque des revendications précédentes, comprenant de plus une source de lumière qui éclaire un emplacement prédéterminé dudit ensemble bandage/roue lorsque ledit bandage est dans ladite position de présentation.

21. Procédé d'installation de poids de correction de l'équilibrage sur une roue sur laquelle est monté un bandage, comprenant les étapes qui consistent à :
a) déterminer sur ladite roue au moins un emplacement où un poids correcteur doit être installé,
b) prévoir un poste d'opérateur (40) pour aider l'opérateur qui installe le poids sur la roue,
c) prévoir un mécanisme (30) de manipulation du bandage monté de manière à pouvoir exécuter un déplacement de va-et-vient sur un parcours qui s'étend entre une position de réception du bandage et une position de présentation du bandage, ledit mécanisme de manipulation du bandage étant supporté de manière à pouvoir exécuter un déplacement de va-et-vient sur deux pistes (34) qui définissent ledit parcours qui s'étend entre ladite position de réception du bandage et ladite position de présentation du bandage,
d) déplacer ledit mécanisme de manipulation du bandage et déplacer ladite roue sur ledit parcours qui s'étend de manière globalement orthogonale audit poste d'opérateur entre ladite position de réception et ladite position de présentation et
e) faire tourner ladite roue autour d'un axe latéral essentiellement perpendiculaire à l'axe de rotation de ladite roue pour présenter un côté de ladite roue dans une orientation située face audit poste d'opérateur pour faciliter l'installation d'un poids correcteur de roue sur ladite roue.

22. Procédé selon la revendication 21, dans lequel on fait tourner la roue autour de son axe de rotation pour placer à proximité étroite dudit poste d'opérateur (40) l'emplacement de ladite roue sur lequel un poids doit être installé.

23. Procédé selon la revendication 22, comprenant de plus l'étape qui consiste à faire tourner ladite roue autour dudit axe latéral jusqu'à ce qu'un autre côté de ladite roue soit situé face audit poste d'opérateur (40), de manière à pouvoir placer un autre poids correcteur de roue en un emplacement prédéterminé de ladite roue.
